# EUROPEAN PATENT APPLICATION

(11) **EP 4 503 301 A1**
(43) Date of publication of application: **05.02.2025**
(21) Application number: 22934253.0
(22) Date of filing: 31.03.2022
(51) Int. Cl.: H01M 50/417, H01M 50/423, H01M 50/426, H01M 10/0525

(54) **SEPARATOR, ELECTROCHEMICAL DEVICE COMPRISING SEPARATOR, AND ELECTRONIC DEVICE**

(71) Applicant: Ningde Amperex Technology Limited, Ningde, Fujian 352100 (CN)
(72) Inventor: XIAO, Wenwu, Ningde, Fujian 352100 (CN); FENG, Bo, Ningde, Fujian 352100 (CN); WEI, Zengbin, Ningde, Fujian 352100 (CN)
(74) Representative: Klunker IP Patentanwälte PartG mbB
(86) International application number: PCT/CN2022/084604
(87) International publication number: WO 2023/184416

(57) **Abstract**

This application provides a separator, an electrochemical device including the separator, and an electronic device, where the separator includes a porous substrate and a porous coating disposed on at least one surface of the porous substrate, where the porous coating includes a polymer and a thickness covariance value of the separator is 0.01 to 0.02. The separator provided in this application has good thickness consistency, which is conducive to improving the packaging performance of the electrochemical device, and the resulting electronic device has a longer service life and good usage performance.

## Description

### TECHNICAL FIELD

This application relates to the field of electrochemical technologies, and specifically, to a separator, an electrochemical device containing the separator, and an electronic device.

### BACKGROUND

Lithium-ion batteries have advantages such as high energy storage density, high open-circuit voltage, low self-discharge rate, long cycle life, and good safety. They are now widely used as power sources for electronic products such as cameras, mobile phones, drones, laptops, and smart watches.

With the expanding application scope of lithium-ion batteries, the market imposes higher requirements on lithium-ion batteries. The separator, as an important component of lithium-ion batteries, directly affects the performance of lithium-ion batteries. Currently, the coating on the surface of the separator in batteries for light power is mostly prepared by spraying, but the obtained separator has poor thickness consistency, which affects the packaging performance of the lithium-ion batteries.

### SUMMARY

This application is intended to provide a separator, an electrochemical device containing the separator, and an electronic device, to improve the thickness consistency of the separator in the electrochemical device, thereby improving the packaging performance of the electrochemical device.

It should be noted that in the invention content of this application, a lithium-ion battery is used as an example of an electrochemical device to explain this application. However, the electrochemical device of this application is not limited to the lithium-ion battery.

A first aspect of this application provides a separator, where the separator includes a porous substrate and a porous coating disposed on at least one surface of the porous substrate, where the porous coating includes a polymer and a thickness covariance value (COV) of the separator is 0.01 to 0.02. Specifically, the porous coating is provided on one surface of the porous substrate, or the porous coatings are provided on both surfaces of the porous substrate, where the surface of the porous substrate refers to the two opposing surfaces along its thickness direction. It should be understood that the porous coating can be provided on the entire surface or part of the surface of the porous substrate as long as the purpose of this application can be achieved. The thickness COV of the separator obtained in this application is within the above range. For example, the thickness COV of the separator may be 0.01, 0.012, 0.014, 0.016, 0.018, 0.02, or any range in between, indicating that the separator has good thickness consistency, which is conducive to improving the packaging performance of the electrochemical device. For example, for an electrochemical device containing multiple tabs, this can improve the winding yield of the electrochemical device. In this application, the above tab and winding yield are commonly known tab and winding yield in the art, and the above thickness COV is a commonly known thickness COV in the prior art. It should be understood that the porous substrate (pore size 10nm to 80nm) and the porous coating (polymer coating) both have a pore structure.

Currently, polyvinylidene fluoride-hexafluoropropylene copolymer (PVDF-HFP) is widely used in the coating of separators, where a mass percentage of hexafluoropropylene (HFP) in PVDF-HFP is usually greater than 50% in the absence of a ceramic coating. To enhance the kinetic performance of the electrochemical device, ethyl methyl carbonate (EMC) and dimethyl carbonate (DMC) are usually added to the electrolyte. However, at high temperatures (for example, temperatures greater than or equal to 80°C), EMC and DMC may dissolve PVDF-HFP, causing the separator to exhibit a gelation phenomenon and thereby affecting the packaging performance of the electrochemical device. In addition, the high price of PVDF-HFP also leads to an increase in the cost of the separator. Based on the above problems, this application not only improves the thickness consistency of the separator but also further selects the polymer in the porous coating to alleviate the gelation phenomenon of the separator. The above ceramic coating refers to a ceramic coating known in the art. This is not limited in the embodiments of this application.

In an embodiment of this application, based on a mass of the porous coating, a mass percentage of the polymer is 76.5% to 92.5%, a swelling degree of the polymer in a test electrolyte is 40% to 170%, the test electrolyte includes an organic solvent and lithium hexafluorophosphate, the organic solvent is obtained by mixing ethylene carbonate (EC), propylene carbonate (PC), and DMC in a mass ratio of 7:2:1, and a concentration of the lithium hexafluorophosphate is 1mol/L. The swelling degree of the polymer in the test electrolyte within the above range can alleviate the gelation phenomenon of the separator. Specifically, the mass percentage of the polymer being too low (for example, less than 76.5%) or the swelling degree of the polymer in the test electrolyte being too low (for example, less than 40%) affects the adhesion between the porous substrate and the porous coating, such as adhesion force and/or adhesion area. When the mass percentage of the polymer is too high (for example, greater than 92.5%) or when the swelling degree of the polymer in the test electrolyte is too large (for example, greater than 170%), the polymer easily clogs the pore structure of the porous substrate, affecting the transport of lithium ions, and even causing lithium precipitation and black spot phenomena in the electrochemical device. Through the regulation of the mass percentage and swelling degree of the polymer within the above ranges, for example, the mass percentage of the polymer may be 76.5%, 78%, 80%, 82%, 84%, 85%, 86%, 88%, 90%, 92%, 92.5%, or any range in between, and the swelling degree of the polymer in the test electrolyte may be 40%, 50%, 60%, 70%, 80%, 90%, 100%, 110%, 120%, 130%, 140%, 150%, 160%, 170%, or any range in between, the adhesion between the porous substrate and the porous coating is ensured, and the gelation phenomenon of the separator is alleviated, thereby being conducive to improving the packaging performance of the electrochemical device without affecting the transport performance of lithium ions in the electrochemical device. In this application, the above mentioned swelling degree is a commonly known swelling degree in the art.

In an embodiment of this application, the polymer includes at least one of polyacrylamide, polyolefin with a monomer carbon atom quantity of 19 to 35, polyvinylidene fluoride, PVDF-HFP with a mass percentage of HFP less than 5%, a homopolymer formed from the following compounds, or a copolymer formed from any two of the following compounds: styrene, butadiene, methyl methacrylate, acrylonitrile, acrylic acid, methacrylic acid, isobutyl acrylate, isobutyl methacrylate, butyl acrylate, butyl methacrylate, isooctyl acrylate, isooctyl methacrylate, methyl acrylate, epoxy methyl methacrylate, n-butyl acrylate, cyclohexyl acrylate, octyl acrylate, vinyl acrylate, methyl vinyl acrylate, and isopentyl acrylate. Preferably, the polymer includes at least one of polyvinylidene fluoride, PVDF-HFP with a mass percentage of HFP less than 5%, or a copolymer formed by styrene and one of the following compounds: butadiene, methyl methacrylate, acrylonitrile, acrylic acid, methacrylic acid, isobutyl acrylate, isobutyl methacrylate, butyl acrylate, butyl methacrylate, isooctyl acrylate, isooctyl methacrylate, methyl acrylate, epoxy methyl methacrylate, n-butyl acrylate, cyclohexyl acrylate, octyl acrylate, vinyl acrylate, methyl vinyl acrylate, and isopentyl acrylate.

The above polymer has good thermal stability and electrolyte resistance. Its cross-linked structure allows it to be irregularly distributed in the porous coating and have high adhesion force, ensuring the adhesion between the porous substrate and the porous coating, alleviating the gelation phenomenon of the separator, and thereby enhancing the packaging performance of the electrochemical device. Additionally, the separator containing the above polymer also has good adhesion between the positive electrode and the negative electrode, which can inhibit deformation issues caused by the swelling of the negative electrode, thereby improving the structural stability of the electrochemical device. Particularly, for polymers containing polar functional groups such as carboxyl groups or hydroxyl groups, they can improve the affinity of the electrolyte to sufficiently infiltrate the separator and enhance the adhesion between the separator and the positive electrode, and between the separator and the negative electrode. On the basis of alleviating the gelation phenomenon of the separator, this is further conducive to improving the structural stability of the electrochemical device. Moreover, the above polymers are relatively low-cost, which helps to control the cost of the separator.

In an embodiment of this application, a glass transition temperature (Tg) of the polymer is 40°C to 65°C. The Tg of the polymer being too low (for example, less than 40°C) easily causes adhesion between the porous substrate and the porous coating during the post-treatment (for example, drying treatment) of the separator, clogging the pore structure of the porous substrate and the porous coating, affecting the transport of lithium ions, and leading to lithium precipitation phenomena in the electrochemical device. The Tg of the polymer being too high (for example, greater than 65°C) affects the adhesion between the porous substrate and the porous coating, creating a risk of deformation in the electrochemical device due to insufficient adhesion. Through the regulation of the Tg of the polymer within the above range, for example, the Tg of the polymer may be 40°C, 45°C, 50°C, 55°C, 60°C, 65°C, or any range in between, the thickness consistency of the separator is improved and the gelation phenomenon is alleviated, and on this basis, other performances of the electrochemical device, such as the transport performance of lithium ions and the structural stability of the electrochemical device, are not affected either.

In an embodiment of this application, Dᵥ50 of the polymer is 5µm to 10µm. Dᵥ50 of the polymer being too small (for example, less than 5µm) or too large (for example, greater than 10µm) affects the thickness consistency of the porous coating, thereby affecting the thickness consistency of the separator. Regulating Dᵥ50 of the polymer within the above range, for example, Dᵥ50 of the polymer may be 5µm, 6µm, 7µm, 8µm, 9µm, 10µm, or any range in between, is conducive to improving the thickness consistency of the separator, thereby improving the packaging performance of the electrochemical device. The particle size distribution of the polymer is not particularly limited in this application, provided that the objectives of this application can be achieved. Specifically, the particle size distribution of the polymer being too narrow results in an increase in the cost of the polymer. The particle size distribution of the polymer being too wide affects the thickness consistency of the porous coating, thereby affecting the thickness consistency of the separator. For example, in this application, the particle size distribution of the polymer is characterized by the difference between Dᵥ90 and Dᵥ10. Preferably, 10µm≤Dᵥ90-Dᵥ10≤15µm.

In an embodiment of this application, at 85°C, after the polymer is soaked in a test electrolyte for 2 hours, a viscosity of the test electrolyte is less than or equal to 10000mPa·s. Preferably, the viscosity is greater than or equal to 1mPa·s and less than or equal to 10000mPa·s. This indicates that the polymer has good resistance to the electrolyte, so the separator is not prone to gelation, which is conducive to improving the packaging performance of the electrochemical device.

In an embodiment of this application, a sphericity of the polymer is greater than or equal to 0.7 and less than 1. The sphericity of the polymer being too low (for example, less than 0.7), the polymer dissolves into the pore structure covering the porous substrate, affecting the transport of lithium ions. Through the regulation of the sphericity of the polymer within the above range, for example, the sphericity of the polymer may be 0.7, 0.75, 0.8, 0.85, 0.9, 0.95, 0.99, or any range in between, the thickness consistency of the separator is improved and the gelation phenomenon is alleviated, and on this basis, the lithium ion transport performance in the electrochemical device, such as kinetic performance, is not affected either. In this application, the above sphericity is a commonly known sphericity in the prior art.

In an embodiment of this application, the porous coating further includes an auxiliary binder, a thickener, and a wetting agent, where based on a mass of the porous coating, a mass percentage of the auxiliary binder is 4% to 17.5%, a mass percentage of the thickener is 0.5% to 1%, and a mass percentage of the wetting agent is 3% to 5%. When the mass percentages of the auxiliary binder, the thickener, and the wetting agent are regulated within the above ranges, for example, the mass percentage of the auxiliary binder may be 4%, 5%, 10%, 15%, 17.5%, or any range in between; the mass percentage of the thickener may be 0.5%, 0.6%, 0.7%, 0.8%, 0.9%, 1%, or any range in between; and the mass percentage of the wetting agent may be 3%, 3.5%, 4%, 4.5%, 5%, or any range in between, the obtained separator has good thickness consistency, and its gelation phenomenon is alleviated. The auxiliary binder, thickener, and wetting agent are not particularly limited in this application, provided that the objectives of this application can be achieved. For example, the auxiliary binder may include but is not limited to at least one of cyclohexyl methacrylate, isobutyl acrylate, or methyl methacrylate; the thickener may include but is not limited to at least one of sodium carboxymethyl cellulose, sodium alginate, or gelatin; and the wetting agent may include but is not limited to at least one of alkyl naphthalene sulfonate, sodium dodecylbenzene sulfonate, or polyoxyethylene fatty alcohol ether.

In an embodiment of this application, the separator is hot-pressed at 85°C under a pressure of 1 MPa for 1 hour and a thickness compression ratio of the separator is 80% to 95%. When the thickness compression ratio of the separator is too low (for example, less than 80%), the obtained separator thickness tends to be too thick, increasing the thickness of the electrochemical device, which affects the volumetric energy density of the electrochemical device. The thickness compression ratio of the separator being too high (for example, greater than 95%) affects the structure of the separator itself. Through the regulation of the thickness compression ratio of the separator within the above range, for example, the thickness compression ratio of the separator may be 80%, 85%, 90%, 95%, or any range in between, the thickness consistency of the separator is improved and the gelation phenomenon is alleviated, and on this basis, the volumetric energy density of the electrochemical device is not affected.

In an embodiment of this application, a water contact angle of the porous coating is 60° to 90°. The water contact angle of the porous coating is regulated within the above range, for example, the water contact angle of the porous coating may be 60°, 61°, 70°, 75°, 80°, 85°, 90°, or any range in between. This indicates that the separator has good wettability and can be fully infiltrated by the electrolyte. In this application, the above water contact angle is a commonly known water contact angle in the prior art.

In an embodiment of this application, a surface density of the porous coating is 0.1g/m² to 0.4g/m². The surface density of the porous coating being too low (for example, less than 0.1g/m²) affects the adhesion between the porous substrate and the porous coating. The surface density of the porous coating being too high (for example, greater than 0.4g/m²) affects the transport of lithium ions. Through the regulation of the surface density of the porous coating within the range of this application, for example, the surface density of the porous coating may be 0.1g/m², 0.15g/m², 0.2g/m², 0.25g/m², 0.3g/m², 0.35g/m², 0.4g/m², or any range in between, the thickness consistency of the separator is improved and the gelation phenomenon is alleviated, and on this basis, the lithium ion transport performance in the electrochemical device is not affected.

In an embodiment of this application, a thickness ratio of the porous coating to the porous substrate is 1:2 to 1:5, and a thickness of the porous substrate is 8µm to 40µm. Through the regulation of the thickness ratio of the porous coating to the porous substrate and the thickness of the porous substrate within the above range, for example, the thickness ratio of the porous coating to the porous substrate may be 1:2, 1:3, 1:4, 1:5, or any range in between, and the thickness of the porous substrate may be 8µm, 9µm, 10µm, 11µm, 12µm, 15µm, 20µm, 25µm, 30µm, 35µm, 40µm, or any range in between, the thickness consistency of the separator is improved and the gelation phenomenon is alleviated, and on this basis, the issue that the energy density of the electrochemical device is affected because too large overall thickness of the separator is avoided. The thickness of the porous coating only needs to meet the above thickness ratio of the porous coating to the porous substrate and the thickness range of the porous substrate. For example, the thickness of the porous coating may be 5µm to 20µm.

In an embodiment of this application, a material of the porous substrate may include but is not limited to at least one of polyethylene, polypropylene, polyethylene terephthalate, or polyimide. Preferably, a material of the porous substrate includes polypropylene with a weight-average molecular weight of 100000 to 1000000. The weight-average molecular weight of the polypropylene being too low (for example, less than 100000) affects the adhesion between the porous substrate and the porous coating, thereby affecting the packaging performance of the electrochemical device. The weight-average molecular weight of the polypropylene being too high (for example, greater than 1000000) affects the thickness consistency of the porous coating, thereby affecting the thickness consistency of the separator and the packaging performance of the electrochemical device. Through the regulation of the weight-average molecular weight of the polypropylene in the porous substrate material within the above range, for example, the weight-average molecular weight of the polypropylene may be 100000, 200000, 400000, 600000, 800000, 1000000, or any range in between, the packaging performance of the electrochemical device can be effectively improved.

In an embodiment of this application, the separator satisfies at least one of the following characteristics: (a) an air permeability of the separator is 60s/100mL to 300s/100mL; (b) a porosity of the separator is 30% to 55%; (c) a pore size of the porous substrate is 10nm to 80nm; and (d) at 130°C, a thermal shrinkage rate of the separator in a length direction and a thermal shrinkage rate of the separator in a width direction are both less than or equal to 10%. The separator meeting at least one of the above characteristics (a)-(d) is beneficial to improving the packaging performance of the electrochemical device, and on this basis, other performances of the electrochemical device, such as lithium ion transport performance and safety performance, are not affected.

In an embodiment of this application, the air permeability of the separator is 60s/100ml to 300s/100ml. Through the regulation of the air permeability of the separator within the above range, for example, the air permeability of the separator may be 60s/100ml, 100s/100ml, 150s/100ml, 200s/100ml, 250s/100ml, 300s/100ml, or any range in between, the thickness consistency of the separator is improved and the gelation phenomenon is alleviated. On this basis, the separator also has a suitable air permeability, which is conducive to improving the packaging performance of the electrochemical device, enabling the electrochemical device to have good kinetic performance (for example, rate performance).

In an embodiment of this application, the porosity of the separator is 30% to 55%. Through the regulation of the porosity of the separator within the above range, for example, the porosity of the separator may be 30%, 35%, 40%, 45%, 50%, 55%, or any range in between, the thickness consistency of the separator is improved and the gelation phenomenon is alleviated. On this basis, the separator can allow normal transport of lithium ions in the electrochemical device, while the separator also has good structural stability, which is conducive to improving the packaging performance of the electrochemical device without affecting lithium ion transport performance and safety performance of the electrochemical device. The porosity of the porous substrate and the porosity of the porous coating in the separator should meet the above porosity requirement of the separator. For example, the porosity of the porous substrate may be 20% to 60%, and the porosity of the porous coating may be 40% to 70%.

In an embodiment of this application, the pore size of the porous substrate is 10nm to 80nm. Through the regulation of the pore size of the porous substrate within the above range, for example, the pore size of the porous substrate may be 10nm, 20nm, 30nm, 40nm, 50nm, 60nm, 70nm, 80nm, or any range in between, the thickness consistency of the separator is improved and the gelation phenomenon is alleviated, and on this basis, normal transport of lithium ions in the electrochemical device is allowed, which is conducive to improving the packaging performance of the electrochemical device without affecting the lithium ion transport performance of the electrochemical device.

In an embodiment of this application, at 130°C, a thermal shrinkage rate of the separator in a length direction and a thermal shrinkage rate of the separator in a width direction are both less than or equal to 10%. Preferably, the thermal shrinkage rate is greater than 0% and less than or equal to 10%, for example, the thermal shrinkage rate in the length direction and the thermal shrinkage rate in the width direction each are 0.1%, 1%, 2%, 3%, 4%, 5%, 6%, 7%, 8%, 9%, 10%, or any range in between, indicating that the separator has good thermal stability. Thus, the packaging performance of the electrochemical device is improved, and on this basis, the electrochemical device also has good safety performance.

The preparation method of the separator is not particularly limited in this application, provided that the objectives of this application can be achieved. For example, the preparation method of the separator may include but is not limited to the following steps: adding the substances (such as the polymer, binder, thickener, and wetting agent) used in the porous coating into a solvent and mixing them evenly to obtain a porous coating slurry, then applying the porous coating slurry on a surface of the porous substrate, followed by drying treatment to obtain the separator. The above solvent is not particularly limited in this application, provided that the objectives of this application can be achieved. For example, the solvent may include but is not limited to at least one of water, ethanol, N-methylpyrrolidone (NMP), or dimethylacetamide. The above applying method is not particularly limited in this application, provided that the objectives of this application can be achieved, for example, the method can be the micro gravure coating method.

A second aspect of this application provides an electrochemical device, including the separator according to any one of the foregoing embodiments. The above separator has good thickness consistency and is not prone to gelation, which is conducive to improving the packaging performance of the electrochemical device.

In an embodiment of this application, the electrochemical device includes an electrolyte, where the electrolyte includes a carboxylic acid ester, and based on a mass of the electrolyte, a mass percentage of the carboxylic acid ester is 10% to 65%. The mass percentage of the carboxylic acid ester being too high (for example, greater than 65%) affects the high-temperature performance of the electrochemical device. The mass percentage of the carboxylic acid ester is regulated within the above range, for example, the mass percentage of the carboxylic acid ester may be 10%, 20%, 30%, 40%, 50%, 60%, 65%, or any range in between. This improves the packaging performance of the electrochemical device, and on this basis, it is conducive to improving the high-temperature performance of the electrochemical device.

In an embodiment of this application, the carboxylic acid ester includes at least one of γ-butyrolactone, γ-valerolactone, methyl acetate, ethyl acetate, propyl acetate, isopropyl acetate, butyl acetate, sec-butyl acetate, isobutyl acetate, tert-butyl acetate, methyl propionate, ethyl propionate, propyl propionate, butyl propionate, amyl propionate, isopropyl propionate, methyl butyrate, ethyl butyrate, propyl butyrate, methyl isobutyrate, ethyl isobutyrate, methyl valerate, ethyl valerate, methyl pivalate, or ethyl pivalate. The above carboxylic acid ester is not prone to react with the above separator, helping to inhibit the gelation phenomenon of the separator, thereby improving the packaging performance of the electrochemical device.

In this application, the electrolyte may further include another non-aqueous solvent. The another non-aqueous solvent is not particularly limited in this application, provided that the objectives of this application can be achieved. For example, the non-aqueous solvent may include but is not limited to at least one of carbonate compound, ether compound, or another organic solvent. The carbonate compound may include but is not limited to at least one of a linear carbonate compound, a cyclic carbonate compound, or a fluorocarbonate compound. The linear carbonate compound may include but is not limited to at least one of DMC, diethyl carbonate (DEC), dipropyl carbonate (DPC), methyl propyl carbonate (MPC), ethylene propyl carbonate (EPC), or methyl ethyl carbonate (MEC). The another cyclic carbonate may include but is not limited to at least one of EC, PC, butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methyl ethylene carbonate, 1,2-difluoro-1-methylethylene carbonate, 1,1,2-trifluoro-2-methylethylene carbonate, or trifluoromethylethylene carbonate. The ether compound may include but is not limited to at least one of ethylene glycol dimethyl ether, diethylene glycol dimethyl ether, tetraethylene glycol dimethyl ether, dibutyl ether, tetrahydrofuran, 2-methyltetrahydrofuran, 1,3-dioxane, 1,4-dioxane, or 1,3-dioxolane. The another organic solvent may include but is not limited to at least one of ethyl vinyl sulfone, methyl isopropyl sulfone, isopropyl sec-butyl sulfone, sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester. Based on the mass of the electrolyte, a mass percentage of the another non-aqueous solvent is 5% to 80%, for example, 5%, 10%, 20%, 30%, 40%, 50%, 60%, 70%, 80%, or any range in between.

In this application, the electrolyte may further include a lithium salt, and the lithium salt is not particularly limited in this application, provided that the objectives of this application can be achieved. For example, the lithium salt may include but is not limited to at least one of lithium hexafluorophosphate, LiAsF₆, LiClO₄, LiCH₃SO₃, LiCF₃SO₃, LiN(SO₂CF₃)₂, LiC(SO₂CF₃)₃, or LiSiF₆, with LiPF₆ being preferred.

In this application, the positive electrode is the positive electrode in the electrochemical device, and the positive electrode usually includes a positive electrode current collector and a positive electrode material layer. In this application, a positive electrode current collector is not particularly limited, provided that the objectives of this application can be achieved. For example, the positive electrode current collector may include but is not limited to aluminum foil, aluminum alloy foil, or a composite current collector. In this application, thickness of the positive electrode current collector is not particularly limited, provided that the objectives of this application can be achieved. For example, the thickness of the positive electrode current collector is 8µm to 12µm. In this application, a positive electrode material layer may be provided on one or two surfaces of the positive electrode current collector in a thickness direction of the positive electrode current collector. It should be noted that the "surface" herein may be an entire region or a partial region of the positive electrode current collector. This is not particularly limited in this application, provided that the objectives of this application can be achieved.

In this application, the positive electrode material layer includes a positive electrode active material, and there are no particular limitations on the positive electrode active material in this application, as long as the purpose of this application can be achieved. For example, it may include but is not limited to at least one of lithium or transition metal element composite oxide, sulfide, selenide, or halide. There are no particular limitations on the above mentioned transition metal elements in this application, as long as the purpose of this application can be achieved. For example, it can include at least one of nickel, manganese, cobalt, or iron. Specifically, the positive electrode active material may include at least one of LiCoO₂, LiNiO₂, LiMnO₂, LiMn₂O₄, Li(Niₐ₁Co_{b1}Mn_{c1})O₂ (0<a1<1, 0<b1<1, 0<c1<1, and a1+b1+c1=1), LiMn₂O₄LiNi_{1-y1}Co_{y1}O₂ (0<y1<1), LiCo_{1-y2}Mn_{y2}O₂ (0<y2<1), LiNi_{1-y3}Mn_{y3}O₂ (0<y3<1), Li (Niₐ₂Mn_{b2}Co_{c2})O₄ (0<a2<2, 0<b2<2, 0<c2<2, and a2+b2+c2=2), LiMn_{2-z1}Ni_{z1}O₄ (0<z1<2), LiMn_{2-z2}Co_{z2}O₄ (0<z2<2), Li(Niₐ₃Co_{b3}Al_{c3})O₂ (0<a3<1, 0<b3<1, 0<c3<1, and a3+b3+c3=1), LiCoPO₄, or LiFePO₄.

The positive electrode material layer may further include a binder. The binder is not particularly limited in this application, provided that the objectives of this application can be achieved. For example, the binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, acrylic styrene-butadiene rubber, epoxy resin, or nylon.

In this application, the positive electrode material layer may further include a conductive agent, and the conductive agent is not particularly limited in this application, provided that the objectives of this application can be achieved. For example, the conductive agent may include but is not limited to at least one of natural graphite, artificial graphite, conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole.

Optionally, the positive electrode may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing conductive agent and binder.

In this application, the negative electrode is the negative electrode in the electrochemical device, and the negative electrode usually includes a negative electrode current collector and a negative electrode material layer. The negative electrode current collector is not particularly limited in this application, provided that the objectives of this application can be achieved. For example, the negative electrode current collector may include but is not limited to copper foil, copper alloy foil, nickel foil, stainless steel foil, titanium foil, foamed nickel, foamed copper, or a composite current collector. In this application, thickness of the negative electrode current collector is not particularly limited, provided that the objectives of this application can be achieved. For example, the thickness of the negative electrode current collector is 4µm to 12µm. In this application, the negative electrode material layer may be provided on one or two surfaces of the negative electrode current collector in a thickness direction of the negative electrode current collector. It should be noted that the "surface" herein may be the entire zone of the negative electrode current collector or a partial zone of the negative electrode current collector. This is not particularly limited in this application, provided that the objective of this application can be achieved.

In this application, the negative electrode material layer includes a negative electrode active material, and the negative electrode active material is not particularly limited, provided that the objectives of this application can be achieved. For example, the negative electrode active material may include but is not limited to at least one of a material capable of reversibly intercalating/deintercalating lithium ions, lithium metal, a lithium metal alloy, a material capable of doping/de-doping lithium, or a transition metal oxide.

The material capable of reversibly intercalating/deintercalating lithium ions may include but is not limited to a carbon material, where the carbon material includes crystalline carbon and/or amorphous carbon. The crystalline carbon may include but is not limited to amorphous or plate-like, small-flake, spherical, or fibrous natural graphite, artificial graphite, pyrolytic carbon, mesophase pitch-based carbon fibers, mesophase carbon microbeads, mesophase pitch, or high temperature calcined carbon (such as petroleum or coke derived from coal tar pitch). The amorphous carbon may include but is not limited to at least one of soft carbon, hard carbon, a mesophase pitch carbonization product, or calcined coke. The lithium metal alloy includes lithium and at least one metal of Na, K, Rb, Cs, Fr, Be, Mg, Ca, Sr, Si, Sb, Pb, In, Zn, Ba, Ra, Ge, Al, or Sn. The material capable of doping/de-doping lithium may include but is not limited to Si, SiOₓ (0<x≤2), a Si/C composite, a Si-Q alloy (where Q includes at least one of an alkali metal, an alkaline earth metal, a group 13 to 16 element, a transition element, or a rare earth element, but it should not be Si), Sn, SnO2, an Sn-C composite, Sn-R (where R includes at least one of an alkali metal, an alkaline earth metal, a group 13 to 16 element, a transition element, or a rare earth element, but it should not be Sn), and the like. Q and R each independently include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po. The transition metal oxide may include but is not limited to vanadium oxide and/or lithium vanadium oxide.

In this application, the negative electrode material layer may further include a conductive agent. The conductive agent is not particularly limited in this application, provided that the objectives of this application can be achieved. For example, the conductive agent may include but is not limited to at least one of the foregoing conductive agents.

In this application, the negative electrode material layer may further include a binder. The binder is not particularly limited in this application, provided that the objectives of this application can be achieved. For example, the binder may include but is not limited to at least of the foregoing binders.

Optionally, the negative electrode plate may further include a conductive layer, and the conductive layer is sandwiched between the negative electrode current collector and the negative electrode material layer. Composition of the conductive layer is not particularly limited in this application, the conductive layer may be a conductive layer commonly used in the art, and the conductive layer may include but is not limited to the foregoing conductive agent and binder.

The electrochemical device in this application is not particularly limited, and may include any apparatus in which an electrochemical reaction occurs. In some embodiments, the electrochemical device may include but is not limited to a lithium metal secondary battery, a lithium-ion secondary battery (lithium-ion battery), a lithium polymer secondary battery, or a lithium-ion polymer secondary battery.

A preparation process of the electrochemical device is well known to a person skilled in the art, and is not particularly limited in this application. For example, the preparation process may include but is not limited to the following steps: A positive electrode, a separator, and a negative electrode are stacked in sequence and go through operations such as winding and folding as needed to obtain an electrode assembly with a winding structure, the electrode assembly is put into a packaging bag, and the packaging bag is injected with an electrolyte and sealed to obtain an electrochemical device; or a positive electrode, a separator, and a negative electrode are stacked in sequence, four corners of the entire laminated structure are fixed with tapes to obtain an electrode assembly with a laminated structure, the electrode assembly is put into a packaging bag, and the packaging bag is injected with an electrolyte and sealed to obtain an electrochemical device. In addition, an overcurrent prevention element, a guide plate, and the like may also be placed into the packaging bag as needed, so as to prevent pressure increase, overcharge, and overdischarge inside the electrochemical device.

A third aspect of this application provides an electronic device, including the electrochemical device according to any one of the foregoing embodiments. The electrochemical device provided in this application has good packaging performance, so that the electronic device provided in this application has longer service life and good usage performance.

The electronic device of this application is not particularly limited, and the electronic device may be any known electronic device used in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

This application provides a separator, an electrochemical device containing the separator, and an electronic device, where the separator includes a porous substrate and a porous coating disposed on at least one surface of the porous substrate, where the porous coating includes a polymer and a thickness COV of the separator is 0.01 to 0.02. The separator provided in this application has good thickness consistency, which is conducive to improving the packaging performance of the electrochemical device. For example, for an electrochemical device containing multiple tabs, this can improve the winding yield of the electrochemical device. The obtained electronic device has longer service life and good usage performance.

### BRIEF DESCRIPTION OF DRAWINGS

To describe technical solutions in the embodiments of this application more clearly, the following briefly describes accompanying drawings required in the embodiments. Apparently, the accompanying drawings in the following descriptions show merely some embodiments in this application, and persons of ordinary skill in the art may derive other embodiments from these accompanying drawings.
FIG. 1 is a schematic diagram showing a sectional structure of a separator according to an embodiment of this application; and
FIG. 2 is a schematic diagram showing a sectional structure of a separator according to another embodiment of this application.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other technical solutions obtained by persons of ordinary skill in the art based on these embodiments of this application shall fall within the protection scope of this application.

It should be noted that, in the specific embodiments of this application, a lithium-ion battery is used as an example of an electrochemical device to explain this application. However, the electrochemical device in this application is not limited to the lithium-ion battery.

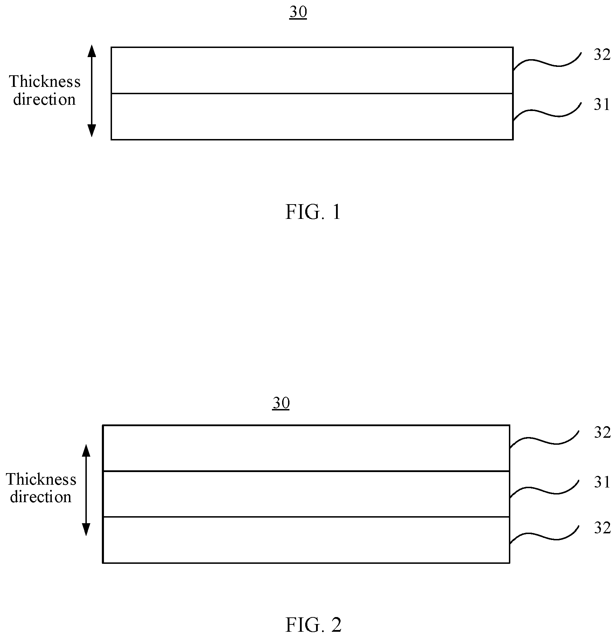

As shown in FIG. 1, the separator 30 includes a porous substrate 31 and a porous coating 32 disposed on one surface of the porous substrate 31 along its thickness direction. It should be understood that the porous coating 32 may also be disposed on both surfaces of the porous substrate 31 along its thickness direction (as shown in FIG. 2).

The following describes some embodiments of this application more specifically by using examples and comparative examples. Various tests and evaluations are performed in the following methods. In addition, unless otherwise specified, "part" and "%" are based on weight.

### Test methods and equipment:

### Testing the Tg of the polymer:

Use a differential scanning calorimeter to test the Tg of the polymer.

### Testing the viscosity of the test electrolyte:

Soak the polymer in the test electrolyte at 85°C for 2 hours, then measure the viscosity of the electrolyte using a rotational viscometer. The mass ratio of the polymer to the test electrolyte is 1:20. The test electrolyte is composed of an organic solvent and lithium hexafluorophosphate. The organic solvent is obtained by mixing EC, PC, and DMC in a mass ratio of 7:2:1. The concentration of lithium hexafluorophosphate is 1mol/L.

### Testing the swelling degree of the polymer:

Add the polymer into water to obtain an emulsion with a solid content of 30wt%. Apply the emulsion on a glass substrate and dry it at 85°C to obtain a polymer film. Immerse the polymer film with a mass of m1 in the test electrolyte at 85°C for 6h, then record the mass of the polymer film at this time as m2. The swelling degree of the polymer=(m2-m1)/m1×100%. Perform the test for 3 times for each example or comparative example, take the average value as the final swelling degree of the polymer. The test electrolyte is the same as the test electrolyte in the electrolyte viscosity test.

### Testing the particle size of the polymer:

In accordance with the national standard GB/T 19077-2016 (particle size distribution laser diffraction method), use a laser particle size analyzer (for example, Malvern Master Size 3000) in the test.

In this application, Dᵥ10 refers to a corresponding particle size when a cumulative volume distribution percentage of the tested polymer reaches 10%; Dᵥ50 refers to a corresponding particle size when a cumulative volume distribution percentage of the tested polymer reaches 50%; and Dᵥ90 refers to a corresponding particle size when a cumulative volume distribution percentage of the tested polymer reaches 90%.

### Testing the thickness compression ratio of the separator:

Stack 10 pieces of separator together, record the thickness at this time as D1, hot press the resulting stack at 85°C under a pressure of 1 MPa for 1 hour, record the thickness at this time as D2, and then test the thickness compression ratio before and after the hot pressing, where the thickness compression ratio=(D1-D2)/D1 × 100%.

### Testing the air permeability of the separator:

Test the air permeability of the separator using an air permeability meter, where the volume of the air column in the air permeability meter is 100cm³, and the test area of the separator is 6.45cm². Ensure the separator remains absolutely flat during the test, repeat the test 3 times, and take the average value as the final air permeability value.

### Testing the porosity of the separator:

Test the porosity of the separator using the gas displacement method, and the porosity=(V-V0)/V×100%, where the pore volume is V-V0, V0 is the true volume of the separator, and V is the total volume of the separator. The testing equipment is an automatic true density tester (AccuPyc II 1340), and the test gas is helium.

### Testing the thermal shrinkage rate of the separator:

Disassemble the lithium-ion battery to obtain the separator, stack the separator in the length direction (MD direction) to obtain three layers of separator with aligned edges in the length direction. Use a die with dimensions of 72.5mm×54.2mm, where an edge of the die with a length of 72.5mm is placed parallel to the length direction of the separator, and use a punching machine to punch the separator to obtain three separator samples. Measure the dimension X1 in the width direction (TD direction) and the dimension Z1 in the length direction of the separator samples. Stack the separator samples by placing a white paper between each separator (the size of the white paper is A6, 105mm×148mm), place the stacked separator samples into a steel tray, and set the oven temperature to 135°C. After the oven reaches the set temperature, put the separator samples into the oven along with the steel tray for baking for 1 hour, take out the samples after baking, and let them stand at room temperature for 10 minutes. Measure the dimensions in the length direction and the width direction for each baked separator sample with a same number. Record the average dimension of the samples in the width direction as X2, and record the average dimension of the samples in the length direction as Z2. If the edges of the samples shrink unevenly, take the position with the greatest shrinkage as the standard. The length direction and width direction of the separator are the commonly used length direction and width direction in the art.

The thermal shrinkage rate in the width direction=(X1-X2)/X1 ×100%

The thermal shrinkage rate in the length direction=(Z1-Z2)/Z1 ×100%.

### Testing the water contact angle of the porous coating:

Use a water contact angle tester to perform the test.

### Testing the thickness:

(1) Testing the thickness range and COV of the separator: Measure one point every 5mm along the length direction of the separator using a micrometer, for a total of 30 points, and then calculate the thickness range and COV of the separator. The thickness range and COV are commonly known thickness range and COV in the prior art and can be calculated according to methods known in the prior art.
(2) Testing the thickness of the lithium-ion battery: Measure a point every 5mm along the length direction of the lithium-ion battery using a micrometer, test a total of 10 points, and take the final average value as the thickness of the lithium-ion battery.

### Testing the wet-press adhesion force:

Fully charge the lithium-ion battery, disassemble it, and obtain the part where the separator is combined with the positive electrode. Cut the combined part into strip samples of 15mm×54.2mm and test the adhesion force between the separator and the positive electrode according to the national standard GB/T 2792-1998 ("Test Method for Peel Strength of Pressure-Sensitive Tape at 180° Angle").

### Determination of the gelation phenomenon:

Discharge the lithium-ion batteries in each example and comparative example, then disassemble them and observe whether there is a gel-like substance inside each lithium-ion battery. If there is a gel-like substance, the separator is deemed to have a gelation phenomenon and marked as "Yes"; if there is no gel-like substance, the separator is deemed not to have a gelation phenomenon and marked as "No".

### Determination of lithium precipitation degree:

The lithium-ion battery was placed in a 0°C thermostat and left there for 60 minutes so that the lithium-ion battery reached a constant temperature. At 0°C, charge the lithium-ion battery that has reached a constant temperature at a constant current of 1C to 4.45V, then charge it at a constant voltage of 4.45V to 0.025C, leave it standing for 5 minutes, and then discharge it at a constant current of 1C to 3.0V. This is one charge-discharge cycle. After 10 charge-discharge cycles, charge the battery again at a constant current of 1C to 4.45V, then charge it at a constant voltage of 4.45V to 0.025C to obtain a fully charged battery that has cycled 10 times. Disassemble the battery in a drying room with a humidity of less than 5%, and take photos to record the state of the negative electrode plate.

Determine the lithium precipitation degree of the lithium-ion battery according to the following standards:
No lithium precipitation: no lithium deposits on the surface of the negative electrode plate;
Slight lithium precipitation: lithium deposits on less than 10% of the surface area of the negative electrode plate;
Moderate lithium precipitation: lithium deposits on 10% to 30% of the surface area of the negative electrode plate; and
Severe lithium precipitation: lithium deposits on more than 30% of the surface area of the negative electrode plate.

### Testing the winding yield:

Use a winding device to continuously produce 1000 lithium-ion batteries, and count the number of scrapped lithium-ion batteries due to tab misalignment. Winding yield=(1-number of scrapped batteries due to tab misalignment/1000)×100%. If the tab misalignment is severe enough to prevent welding, it is determined as tab misalignment.

### Storage performance at 80°C:

Leave the lithium-ion battery standing for 30 min in an environment of 25°C, charge the battery to 4.2V at a constant current of 0.2C, then charge the battery to 0.05C at a constant voltage of 4.2V Leave it standing for 30 minutes, then discharge the battery to 2.8V at a constant current of 0.5C. Record the appearance dimensions of the lithium-ion battery at this time. Then place the fully charged battery in an 80°C oven for storage for 7 days, and record the appearance dimensions of the lithium-ion battery after the storage.

Judge the storage performance of the lithium-ion battery according to the following deformation standards:
No deformation: Thickness change rate of the lithium-ion battery is less than 3%;
Slight deformation: Thickness change rate of the lithium-ion battery is 3% to 10%; and
Deformation: Thickness change rate of the lithium-ion battery is greater than 10%.

### Example 1-1

### <Preparation of positive electrode>

A positive electrode active material LiCoO₂, a conductive agent conductive carbon black, and a binder polyvinylidene fluoride were mixed at a mass ratio of 96:2:2, added with N-methylpyrrolidone (NMP), and well stirred by a vacuum stirrer to obtain a positive electrode slurry with a solid content of 70wt%. The positive electrode slurry was uniformly applied onto one surface of a positive electrode current collector aluminum foil with a thickness of 12µm, and the aluminum foil was dried at 120°C for 1h to obtain a positive electrode having a single surface coated with a positive electrode material layer. The foregoing steps were repeated on another surface of the aluminum foil to obtain a positive electrode coated with positive electrode material layers on two surfaces. After cold pressing, cutting, and slitting, drying was performed in a vacuum at 120°C for 1 h to obtain a 74mm×867mm positive electrode.

### <Preparation of negative electrode>

A negative electrode active material graphite, a binder styrene-butadiene rubber, and sodium carboxymethyl cellulose were mixed at a mass ratio of 97.4:1.4:1.2, added with deionized water. The foregoing substances were well stirred by a vacuum mixer to obtain a negative electrode slurry with a solid content of 75wt%. The negative electrode slurry was evenly applied on one surface of a negative electrode current collector copper foil having a thickness of 12µm, and the copper foil was dried at 120°C to obtain a negative electrode having a coating thickness of 130µm and with one surface coated with the negative electrode material layer. The foregoing steps were repeated on another surface of the aluminum foil to obtain a negative electrode coated with negative electrode material layers on two surfaces. After cold pressing, cutting, and slitting, drying was performed in a vacuum at 120°C for 1h to obtain a 78mm×875mm negative electrode.

### <Preparation of electrolyte>

In a glove box under an argon atmosphere with a moisture content<10ppm, EC, PC, and DMC were mixed at a mass ratio of 3:2.5:4.5 to obtain an organic solvent, and then a lithium salt Lithium hexafluorophosphate was added to the organic solvent to obtain an electrolyte. A concentration of the lithium salt was 1 mol/L.

### <Preparation of separator>

The cyclohexyl methacrylate and isobutyl acrylate were mixed in a mass ratio of 5:95 to obtain an auxiliary binder. The polymer styrene-isooctyl acrylate copolymer, the auxiliary binder, the thickener sodium carboxymethyl cellulose, and the wetting agent polyoxyethylene fatty alcohol ether were mixed in a mass ratio of 90:6.5:0.5:3, added with water, and then stirred evenly to obtain a porous coating slurry with a solid content of 10wt%. The porous coating slurry was evenly applied on one surface of a porous substrate with a thickness of 16µm using a micro gravure coating method, and then dried at 45°C to obtain a separator coated with the porous coating on one side. The above steps were repeated to obtain a separator applied with the porous coating on two sides. The polymer had a Dᵥ50 of 8µm, sphericity of 0.8, and Tg of 50°C. The mass ratio of the styrene to isooctyl acrylate in the styrene-isooctyl acrylate copolymer was 7:3. The material of the porous substrate was polypropylene with a weight-average molecular weight of 500000, the pore size of the porous substrate was 30nm, the thickness of the porous substrate was 16µm, the surface density of the porous coating was 0.2g/m², and the thickness ratio of the porous coating to the porous substrate was 1:3.

### <Preparation of lithium-ion battery>

The prepared positive electrode, separator, and negative electrode were stacked in sequence, so that the separator was sandwiched between the positive electrode and the negative electrode for separation. Then the resulting stack was wound to obtain an electrode assembly. The electrode assembly was put into an aluminum-plastic film packaging bag which was filled with the electrolyte after drying, followed by processes such as vacuum packaging, standing, formation, degassing, and cutting to obtain a lithium-ion battery.

### Example 1-2 to example 1-10

These comparative examples were the same as example 1-1 except that the related parameters were adjusted according to Table 1.

### Example 2-1 to example 2-3

These examples were the same as example 1-1 except that the related parameters were adjusted according to Table 2.

### Example 3-1 to example 3-4

These examples were the same as example 1-1 except that the related parameters were adjusted according to Table 3.

### Example 4-1 to example 4-8

These examples were the same as example 1-1 except that the related parameters were adjusted according to Table 4.

### Example 5-1 to example 5-6

These examples were the same as example 1-1 except that in the step of <Preparation of electrolyte>, in the preparation of the organic solvent, the carboxylic acid ester was added according to Table 5 and related parameters were adjusted according to Table 5.

### Comparative example 1

This comparative example was the same as example 1-1 except that the polymer was replaced with PVDF-HFP in <Preparation of separator>, where a mass percentage of HFP in PVDF-HFP was 10%.

Related preparation parameters and performance parameters of the examples and comparative examples are shown in Table 1 to Table 5.

**Table 1**

| | Polymer | Tg of Polymer (°C) | Viscosity of Test Electrolyte (mPa·s) | Swelling Degree of Polymer (%) | Thickness Compression Ratio of Separator (%) | Thickness Range of Separator (µm) | Thickness COV of Separator | Wet-press Adhesion Force (N/m) | Gelation Phenomenon | Lithium Precipitation Degree | Winding Yield (%) |
|---|---|---|---|---|---|---|---|---|---|---|---|
| Example 1-1 | Styrene-isooctyl acrylate copolymer (7:3) | 52 | 14.5 | 81 | 90 | 3.1 | 0.015 | 5.5 | No | No lithium precipitation | 99.7 |
| Example 1-2 | Styrene-isobutyl acrylate copolymer (8:2) | 58 | 13.8 | 52 | 85 | 3.2 | 0.014 | 5.1 | No | No lithium precipitation | 99.6 |
| Example 1-3 | Styrene-vinyl acrylate copolymer (6:4) | 45 | 14.8 | 111 | 92 | 2.9 | 0.016 | 6.0 | No | No lithium precipitation | 99.5 |
| Example 1-4 | Styrene-methyl acrylate copolymer (5:5) | 50 | 15.2 | 130 | 94 | 3.3 | 0.015 | 5.2 | No | No lithium precipitation | 99.7 |
| Example 1-5 | Styrene-cyclohexyl acrylate copolymer (7:3) | 53 | 13.9 | 85 | 95 | 3 | 0.013 | 4.6 | No | No lithium precipitation | 99.8 |
| Example 1-6 | Styrene-octyl acrylate copolymer (6:4) | 48 | 15.6 | 115 | 95 | 3.1 | 0.014 | 4.8 | No | No lithium precipitation | 99.6 |
| Example 1-7 | Styrene-isobutyl acrylate copolymer (8:2) | 57 | 14.2 | 55 | 87 | 3.2 | 0.017 | 3.5 | No | No lithium precipitation | 99.6 |
| Example 1-8 | Styrene-methyl vinyl acrylate copolymer (4:6) | 40 | 15.6 | 169 | 95 | 3.1 | 0.016 | 6.8 | No | Light precipitation of lithium | 99.7 |
| Example 1-9 | Styrene-isopentyl acrylate copolymer (9:1) | 65 | 16.1 | 41 | 80 | 3.3 | 0.017 | 2.4 | No | No lithium precipitation | 99.5 |
| Example 1-10 | PVDF-HFP with a mass percentage of HFP as 4% | 45 | 50.7 | 32 | 94 | 3.1 | 0.018 | 2.1 | No | No lithium precipitation | 99.6 |
| Comparative example 1 | PVDF-HFP | 40 | >10000 | 36 | 95 | 10 | 0.04 | 5.5 | Yes | No lithium precipitation | 98.6 |

| | | | | | | | | | | | |
|---|---|---|---|---|---|---|---|---|---|---|---|
| Note: In example 1 in Table 1, the '7:3' in the styrene-isooctyl acrylate copolymer (7:3) indicates that the mass ratio of styrene to iso-octyl acrylate in the styrene-isooctyl acrylate copolymer is 7:3. The descriptions for the other examples follow the same convention. | | | | | | | | | | | |

From example 1-1 to example 1-10 and comparative example 1, it can be seen that when the thickness COV of the separator is within the range specified in this application, the winding yield of the lithium-ion battery is improved, meaning that the packaging performance of the lithium-ion battery is enhanced.

The performance of the polymer and the separator usually affects the performance of the lithium-ion battery. From example 1-1 to example 1-10, it can be seen that when the polymer is within the range specified in this application, the gelation phenomenon of the separator is alleviated, and the resulting lithium-ion battery has good packaging performance and improved lithium precipitation characteristics.

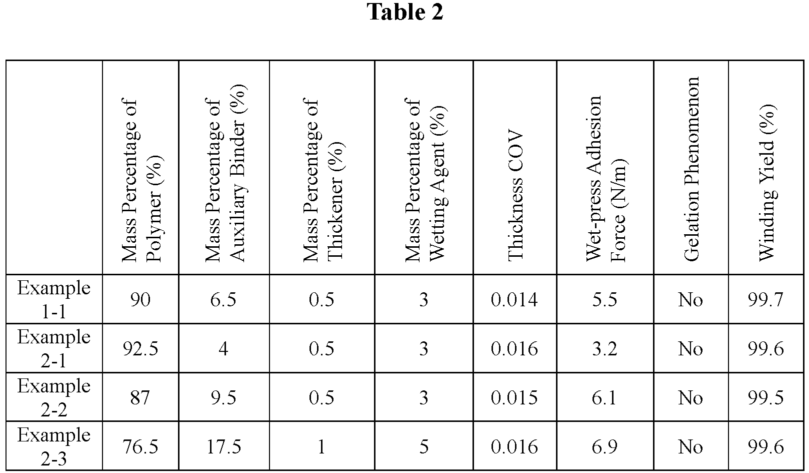

The mass percentages of the polymer, auxiliary binder, thickener, and wetting agent in the porous coating usually may affect the performance of the separator and the lithium-ion battery. From example 1-1 and example 2-1 to example 2-3, it can be seen that when the mass percentage of the polymer, auxiliary binder, thickener, and wetting agent in the porous coating is within the scope of this application, the obtained separator exhibits good thickness consistency, electrolyte resistance, and thermal stability. The gelation phenomenon of the separator is alleviated, and the resulting lithium-ion battery has good packaging performance and improved lithium precipitation characteristics.

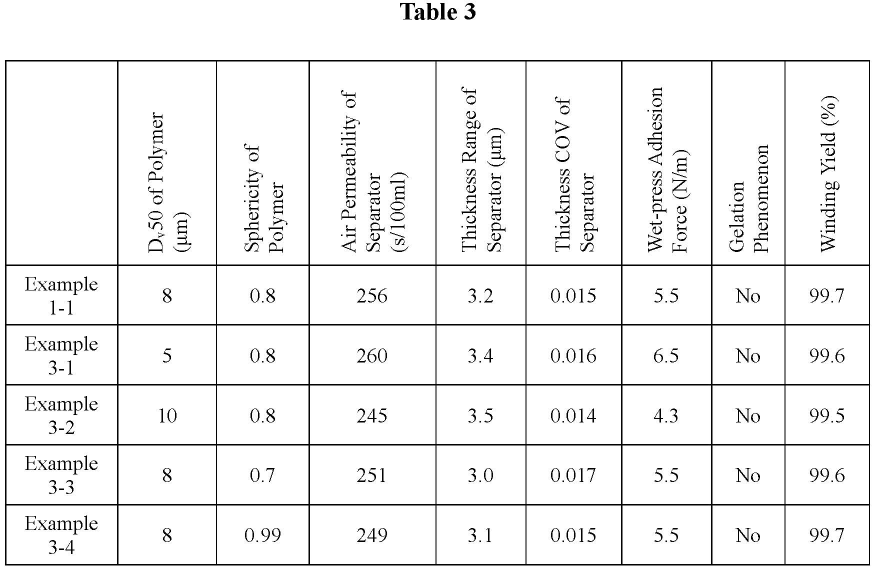

The Dᵥ50 and sphericity of the polymer usually affect the performance of the separator and the lithium-ion battery. From example 1-1 and example 3-1 to 3-4, it can be seen that when the Dᵥ50 and sphericity of the polymer are within the ranges specified in this application, the resulting separator also has good thickness consistency and its gelation phenomenon is alleviated. Consequently, the resulting lithium-ion battery has good packaging performance and improved lithium precipitation characteristics.

**Table 4**

| | Thickness of Porous Substrate (µm) | Thickness Ratio of Porous Coating to Porous Substrate | Surface Density of Porous Coating (g/m²) | Pore Size of Porous Substrate (nm) | Weight-Average Molecular Weight of Polypropylene | Thermal Shrinkage Rate of Separator in Length Direction at 130°C (%) | Thermal Shrinkage Rate of Separator in Width Direction at 130°C (%) | Water Contact Angle of Porous Coating (°) | Thickness COV of Separator | Wet-press Adhesion Force (N/m) | Gelation Phenomenon | Winding Yield (%) |
|---|---|---|---|---|---|---|---|---|---|---|---|---|
| Example 1-1 | 16 | 1:3 | 0.2 | 30 | 500000 | 3.1 | 0.4 | 72 | 0.016 | 5.2 | No | 99.7 |
| Example 4-1 | 12 | 1:2 | 0.2 | 30 | 500000 | 4.1 | 0.3 | 74 | 0.015 | 5.3 | No | 99.6 |
| Example 4-2 | 40 | 1:5 | 0.2 | 30 | 500000 | 3.5 | 0.5 | 70 | 0.014 | 5.1 | No | 99.5 |
| Example 4-3 | 16 | 1:3 | 0.1 | 30 | 500000 | 3.3 | 0.4 | 68 | 0.017 | 3.1 | No | 99.5 |
| Example 4-4 | 16 | 1:3 | 0.4 | 30 | 500000 | 3.6 | 0.3 | 73 | 0.014 | 7.4 | No | 99.7 |
| Example 4-5 | 16 | 1:3 | 0.2 | 10 | 500000 | 3.8 | 0.4 | 72 | 0.016 | 5.2 | No | 99.5 |
| Example 4-6 | 16 | 1:3 | 0.2 | 60 | 500000 | 3.3 | 0.4 | 70 | 0.018 | 5.1 | No | 99.6 |
| Example 4-7 | 16 | 1:3 | 0.2 | 30 | 100000 | 2.3 | 0.2 | 75 | 0.017 | 5.5 | No | 99.4 |
| Example 4-8 | 16 | 1:3 | 0.2 | 30 | 1000000 | 1.7 | 0.1 | 69 | 0.016 | 5.5 | No | 99.5 |

The thickness of the porous substrate, the thickness ratio of the porous coating to the porous substrate, the surface density of the porous coating, the pore size of the porous substrate, and the weight-average molecular weight of the polypropylene usually affect the performance of the separator and the lithium-ion battery. From example 1-1 and example 4-1 to example 4-8, it can be seen that when the thickness of the porous substrate, the thickness ratio of the porous coating to the porous substrate, the surface density of the porous coating, the pore size of the porous substrate, and the weight-average molecular weight of the polypropylene are within the ranges specified in this application, the resulting separator has good thickness consistency, an appropriate water contact angle, and thermal stability. Additionally, its gelation phenomenon is alleviated, resulting in a lithium-ion battery with good packaging performance and improved lithium precipitation characteristics.

**Table 5**

| | Organic Solvent in the Electrolyte | Mass Ratio of Component s of the Organic Solvent in the Electrolyte | Mass Percentage of Carboxyli c Acid Ester (%) | Gelation Phenomeno n | High-temperature storage performanc e at 80°C: | Windin g Yield (%) |
|---|---|---|---|---|---|---|
| Exampl e 1-1 | EC+PC+DMC | 3:2.5:4.5 | 45 | No | Slight deformation | 99.6 |
| Exampl e 5-1 | EC+PC+amyl propionate | 3:2.5:4.5 | 45 | No | No deformation | 99.7 |
| Exampl e 5-2 | EC+PC+butyl acetate | 3:2.5:4.5 | 45 | No | No deformation | 99.5 |
| Exampl e 5-3 | EC+PC+ethyl acetate | 3:2.5:4.5 | 45 | No | No deformation | 99.6 |
| Exampl e 5-4 | EC+PC+isopropy 1 propionate | 3:2.5:4.5 | 45 | No | No deformation | 99.7 |
| Exampl e 5-5 | EC+PC+isopropy 1 propionate | 5:4:1 | 10. | No | No deformation | 99.5 |
| Exampl e 5-6 | EC+PC+isopropy 1 propionate | 2:1.5:6.5 | 65 | No | No deformation | 99.6 |

The components in the electrolyte usually affect the performance of the lithium-ion battery. Referring to Table 5, from example 1-1 and example 5-1 to example 5-6, it can be seen that when the electrolyte contains carboxylic acid ester and its type and mass percentage are within the ranges specified in this application, the packaging performance and high-temperature storage performance of the lithium-ion battery can be further improved.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A separator, comprising a porous substrate and a porous coating disposed on at least one surface of the porous substrate, wherein the porous coating comprises a polymer and a thickness covariance value of the separator is 0.01 to 0.02.

2. The separator according to claim 1, wherein based on a mass of the porous coating, a mass percentage of the polymer is 76.5% to 92.5%, a swelling degree of the polymer in a test electrolyte is 40% to 170%, the test electrolyte comprises an organic solvent and lithium hexafluorophosphate, the organic solvent is obtained by mixing ethylene carbonate, propylene carbonate, and dimethyl carbonate in a mass ratio of 7:2:1, and a concentration of the lithium hexafluorophosphate is 1mol/L.

3. The separator according to claim 1, wherein the polymer comprises at least one of polyacrylamide, polyolefin with a monomer carbon atom quantity of 19 to 35, polyvinylidene fluoride, polyvinylidene fluoride-hexafluoropropylene copolymer with a mass percentage of hexafluoropropylene less than 5%, a homopolymer formed from the following compounds, or a copolymer formed from any two of the following compounds: styrene, butadiene, methyl methacrylate, acrylonitrile, acrylic acid, methacrylic acid, isobutyl acrylate, isobutyl methacrylate, butyl acrylate, butyl methacrylate, isooctyl acrylate, isooctyl methacrylate, methyl acrylate, epoxy methyl methacrylate, n-butyl acrylate, cyclohexyl acrylate, octyl acrylate, vinyl acrylate, methyl vinyl acrylate, and isopentyl acrylate.

4. The separator according to claim 1, wherein the polymer comprises at least one of polyvinylidene fluoride, polyvinylidene fluoride-hexafluoropropylene copolymer with a mass percentage of hexafluoropropylene less than 5%, or a copolymer formed by styrene and one of the following compounds: butadiene, methyl methacrylate, acrylonitrile, acrylic acid, methacrylic acid, isobutyl acrylate, isobutyl methacrylate, butyl acrylate, butyl methacrylate, isooctyl acrylate, isooctyl methacrylate, methyl acrylate, epoxy methyl methacrylate, n-butyl acrylate, cyclohexyl acrylate, octyl acrylate, vinyl acrylate, methyl vinyl acrylate, and isopentyl acrylate.

5. The separator according to claim 1, wherein a glass transition temperature of the polymer is 40°C to 65°C.

6. The separator according to claim 1, wherein Dᵥ50 of the polymer is 5µm to 10µm.

7. The separator according to claim 1, wherein at 85°C, after the polymer is soaked in a test electrolyte for 2 hours, a viscosity of the test electrolyte is less than or equal to 10000mPa·s, wherein the test electrolyte comprises an organic solvent and lithium hexafluorophosphate, the organic solvent is obtained by mixing ethylene carbonate, propylene carbonate, and dimethyl carbonate in a mass ratio of 7:2:1, and a concentration of the lithium hexafluorophosphate is 1mol/L.

8. The separator according to claim 1, wherein a sphericity of the polymer is greater than or equal to 0.7 and less than 1.

9. The separator according to claim 1, wherein the porous coating further comprises an auxiliary binder, a thickener, and a wetting agent, wherein based on a mass of the porous coating, a mass percentage of the auxiliary binder is 4% to 17.5%, a mass percentage of the thickener is 0.5% to 1%, and a mass percentage of the wetting agent is 3% to 5%.

10. The separator according to claim 1, wherein the separator is hot-pressed at 85°C under a pressure of 1 MPa for 1 hour and a thickness compression ratio of the separator is 80% to 95%.

11. The separator according to claim 1, wherein a water contact angle of the porous coating is 60° to 90°.

12. The separator according to claim 1, wherein a surface density of the porous coating is 0. 1g/m² to 0.4g/m².

13. The separator according to claim 1, wherein a thickness ratio of the porous coating to the porous substrate is 1:2 to 1:5, and a thickness of the porous substrate is 8µm to 40µm.

14. The separator according to claim 1, wherein a material of the porous substrate comprises polypropylene with a weight-average molecular weight of 100000 to 1000000.

15. The separator according to claim 1, which satisfies at least one of the following characteristics:
(a) an air permeability of the separator is 60s/100mL to 300s/100mL;
(b) a porosity of the separator is 30% to 55%;
(c) a pore size of the porous substrate is 10nm to 80nm; and
(d) at 130°C, a thermal shrinkage rate of the separator in a length direction and a thermal shrinkage rate of the separator in a width direction are both less than or equal to 10%.

16. An electrochemical device, comprising the separator according to any one of claims 1 to 15.

17. The electrochemical device according to claim 16, comprising an electrolyte, wherein the electrolyte comprises a carboxylic acid ester, and based on a mass of the electrolyte, a mass percentage of the carboxylic acid ester is 10% to 65%.

18. The electrochemical device according to claim 17, wherein the carboxylic acid ester comprises at least one of γ-butyrolactone, γ-valerolactone, methyl acetate, ethyl acetate, propyl acetate, isopropyl acetate, butyl acetate, sec-butyl acetate, isobutyl acetate, tert-butyl acetate, methyl propionate, ethyl propionate, propyl propionate, butyl propionate, amyl propionate, isopropyl propionate, methyl butyrate, ethyl butyrate, propyl butyrate, methyl isobutyrate, ethyl isobutyrate, methyl valerate, ethyl valerate, methyl pivalate, or ethyl pivalate.

19. An electronic device, comprising the electrochemical device according to any one of claims 16 to 18.
